# EUROPEAN PATENT SPECIFICATION

(11) **EP 2 049 330 B1**
(45) Date of publication and mention of the grant of the patent: **17.03.2010**
(21) Application number: 07766497.7
(22) Date of filing: 16.07.2007
(51) Int. Cl.: B32B 17/10, C03C 27/12, B61D 25/00

(54) **EMERGENCY ESCAPE WINDOW WITH BREAK-OUT ZONE AND A PREDETERMINED IMPACT POINT AND METHOD FOR PRODUCING THEREOF**
NOTFLUCHTFENSTER MIT AUSBRECHZONE UND VORBESTIMMTER AUFPRALLSTELLE SOWIE HERSTELLUNGSVERFAHREN DAFÜR
FENÊTRE D'ÉVACUATION EN CAS D'URGENCE AVEC ZONE DE RUPTURE ET POINT D'IMPACT PRÉDÉFINI ET SON PROCÉDÉ DE PRODUCTION

(30) Priority: 18.07.2006 HU 0600595
(43) Date of publication of application: 22.04.2009
(73) Proprietor: Hirschler Üvegipari Vallalkozas, 9400 Sopron (HU)
(72) Inventor: HIRSCHLER, László, 9400 Sopron (HU)
(74) Representative: Jakabné Molnar, Judit
(86) International application number: PCT/HU2007/000065
(87) International publication number: WO 2008/010002

(56) References cited:
- DE-C1- 10 119 315
- US-A- 5 523 138
- US-A1- 2004 023 039

## Description

The object of the invention is an emergency escape window with break-out zone and a predetermined impact point for vehicles, primarily for railroad vehicles, comprising a laminated glass pane embedded in a frame. The laminated glass pane consists of at least two toughened glass plates and an interlayer or interlayers located between the glass plates, where the glass plates are not bonded together in the break-out zone.

A further object of the invention is a method for producing the emergency escape window.

In unforeseen emergency situations it is of utmost importance that passengers of road and railroad vehicles can escape from the vehicle. Therefore, such vehicles must be equipped with safety doors or windows that can be opened even in case regular doors or windows have become inoperable. According two prior art solutions laminated glass panes are applied as safety glass for vehicle fenestration. These usually consist of two toughened glass plates and a bounding interlayer inserted therebetween. If the glass is hit, one of the toughened glass plates is usually shattered but the splinters do not fall off as they are bonded to the other glass plate. Thereby the glass plate cannot be removed from the frame by pushing it by hand, even if the only way of escape was through the window, or if the only way for rescuers to reach passengers inside the vehicle was through it. According to the prior art a break-out zone is disposed in the glass pane of vehicle windows serving as emergency exits or rescue windows. In the break-out zone the (otherwise bonded) glass plates of the laminated glass pane are not bounded together, meaning that in this zone, more particularly in the so called predetermined impact point the glass plates may be shattered and the window may be removed from its frame by pushing it. The pushed-out or pushed-in portion becomes separated from the portion remaining attached to the window frame, making accessible the interior of the vehicle.

An emergency escape window with break-out zone and a predetermined impact point is disclosed in the document EP 1 423 272. The escape window is fabricated from laminated glass. In the break out zone an air gap is located between the toughened glass plates instead of the adhesive interlayer. A notably shortcoming of this solution is that due to frequently occurring extreme temperature changes water vapour may condense and precipitate in the air gap, which may eliminate interlayer adhesion and result in the adhesive interlayer getting separated from the glass plates. A further disadvantage is that glass plates exposed to intensive sunlight get heated to a great extent which may cause the softening and "creeping" of the adhesive interlayer. In extremes cases the break-out zone may get narrowed to an extent that escaping through the window beoomes impossible. Due to the softening of the adhesive interlayer the mark indicating the impact point may become displaced and therefore may give a false indication, losing its original function.

The aim of the invention is providing, by improving the known solution, an escape window that conforms to the regulations and can be produced simply and quickly with relatively low cost.

The invention is based on the recognition that the break-out zone can be implemented between the glass plates of the laminated glass pane by splitting the adhesive interlayer in the break-out zone, while preventing the adhesive interlayer from adhering to the glass plates.

Based on the above recognition an emergency escape window is provided that is essentially characterised by that anti-adhesive foil or an anti-adhesive layer and at least one cutting element adapted for splitting the adhesive interlayer after lamination are disposed in the break-out zone between the glass plates and the adhesive interlayer.

In a preferred embodiment of the inventive emergency escape window the anti-adhesive foil is aluminium foil. The anti-adhesive foil may of course be made from other type of foil. The anti-adhesive layer may be produced applying any conventional industrial mould release agent, for instance wax or paraffin.

The width of the break-out zone is determined by the width of the anti-adhesive foil or layer, and is preferably 20 mm. With the application of a break-out zone of such a width the glass pane may be securely removed from the frame. Punching the glass pane at the impact point causes one glass plate to shatter into small splinters. The pieces do not fail off as the glass plates are bonded to the adhesive interlayer. With a second blow the other glass plate may also be shattered. The impact point may shave two different configurations. In one configuration an anti-adhesive layer is disposed on both sides of the adhesive interlayer also in the area of the impact point. This configuration provides that glass splinters resulting from the first blow are separated and come off in the impact point area, freeing the area for a hit at the other plate. In this case the second blow (to said other plate) is dealt indirectly, through the adhesive interlayer. According to the other configuration there is no adhesive foil in the impact point area (as the foil has been cut out before bonding together the plates). In this case there is no adhesive interlayer that could keep glass splinters in the impact area and so splinters fall off after the first blow. The second glass plate may be shattered by hitting it directly. Size of the splinters is in any way smaller than 20 mm, which means that the break-out zone will not be covered by splinters with both edges extending from the zone and thereby forming a "bridge" over it. Thus, without any glass splinters "bridging" the break-out zone the glass pane may be pushed out of the frame.

According to a preferred embodiment of the invention the cutting element is implemented as a wire having a diameter that equals the thickness of the adhesive interlayer. The wire may be made of copper but cutting elements made of other materials, e.g. plastic, may also be applied. The only requirement for the material of the cutting element is that it should not soften or melt at the lamination temperature (cca. 150°). In another preferred embodiment of the invention a so called "damil" string (nylon string) is applied as cutting element.

The cross section of the cutting element should be chosen such that the cutting element may completely split (cut through) the adhesive interlayer after laminating the glass pane. According to a preferred embodiment of the invention this is achieved by applying a cutting element made from a circular cross-section wire with a diameter substantially equalling the thickness of the adhesive interlayer. The cross sectional shape of the cutting element is not significant from the aspect of the present invention. The simplest implementation of the cutting element is a circular cross-section wire but other cross-sectional shapes such as rectangular or flat may also be applicable as well as profile wires or even tubular shapes.

According to another preferred embodiment of the invention the break-out zone may be made up in a circular fashion near all four sides of the safety window or may be locate similar to a U-shape near the two sides and the upper edge thereof. In case a circular, closed break-out zone is applied, the inner part of the glass pane falls out from the frame after the glass is shattered, In case of a U-shaped break-out zone the inner part of the glass pane remains attached to the frame after breaking the glass.

The materials applied for producing the glass plates and adhesive interlayer of the emergency escape window according to the invention are known from prior art. The glass plates may be manufactured from single-layer safety glass (toughened glass). Emergency windows made utilizing multilayer safety glass or heat-insulated emergency, windows also fall into the scope of then invention.

According to a preferred embodiment of the invention the adhesive interlayer is made of polyvinyl-butyral (PVB), a material conventionally applied in the art. According to another preferred embodiment the adhesive interlayer may be made of ethylene-vinyl-acetate (EVA).

According to the invention the emergency escape window is produced by inserting an adhesive interlayer between the toughened glass plates, placing in the break-out zone an anti-adhesive foil on the toughened glass plates or on the adhesive interlayer and at least one cutting element between at least one of the toughened glass plates and the anti-adhesive foil, and subsequently laminating the glass pane in a manner known per se, during which operation the cutting element completely cuts through the molten adhesive interlayer.

According to the invention, the emergency escape window may also be produced by inserting an adhesive interlayer between the toughened glass plates, applying in the break-out zone an anti-adhesive layer on the toughened glass plates or on the adhesive interlayer. At least one cutting element coated with anti-adhesives material is placed between at least one of the toughened glass plates and the anti-adhesive layer, and then the glass pane is laminated in a manner known per se, during which operation the cutting element completely cuts through the molten adhesive interlayer.

According to a preferred way of currying out the inventive method for producing the emergency escape window, anti-adhesive aluminium foil is placed on the first toughened glass plate in the area of the break-out zone before lamination, with PVB foil being placed on the entire grass surface as adhesive Interlayer. An anti-adhesive aluminium foil is placed also on the other side of the adhesive interlayer such that it matches the location of the foil on the first side. The cutting element is laid on the second and adhesive foil, and the structure is finished by placing the second roughened glass plate. Lamination is carried out in the conventional way, first by pre-bonding at increased temperature and then by dressing the plates together under pressure. At the lamination temperature the PVB foil is melted and the cutting element is pressed into the PVB foil, completely cutting through it. The two pieces of aluminium foil present the adhesive PVB foil from sticking to the glass surface in the break-out zone during the manufacturing operation.

According to a preferred way of carrying out the method, the anti-adhesive aluminium foils are first placed onto both sides of the adhesive PVB foil, and the cutting element and foil pieces are subsequently inserted between the glass plates.

Instead of utilizing aluminium foil, an anti-adhesive material may also be applied. According to a preferred method one of the toughened glass plates have been coated with paraffin in the break-out zone, with the adhesive interlayer being applied subsequently. The other toughened glass plate and the cutting element placed thereon were also coated with paraffin to prevent them from getting bonded to the adhesive interlayer. The assembled structure was then laminated.

The cutting element is usually applied in a continuous, uninterrupted fashion in the break-out zone. In case, however, a circular, continuous break-out zone is applied, the cutting element is applied discontinuously, with smaller interruption so as to allow air to escape (conforming to manufacturing requirements of lamination). An arrangement where the cutting element is disposed with small interruptions also falls into the scope of the invention. In this case interruptions are so small-sized that they do not have a significant effect on the separation of the glass pane in the break-out zone. Disposing the cutting element between the toughened glass plate and the anti-adhesive layer ensures that the cutting element does not get bonded to the adhesive interlayer.

Our experiments have shown that applying only one cutting element in the break-out zone is sufficient for completely cutting through the adhesive interlayer. In exceptional cases where special requirements should be met, a need for placing more than one cutting element in the break-out zone may arise. The scope of the invention includes the arrangement where cutting elements are disposed beside each toughened glass plate, or with multiple cutting elements being disposed side by side on one of the glass plates.

The inventive emergency escape window will be explained in more detail with reference to an embodiment illustrated in the attached drawings, where
- Fig. 1: is the schematic view of the emergency escape window according to the invention.
- Fig. 2: shows an increased-scale view of the cross-section of the glass pane of Fig. 1, taken in the break-out zone before lamination,
- Fig. 3: shows an increased-scale view of the cross section of the glass pane shown in Fig.1, taken in the break-out zone after lamination,
- Fig. 4: shows an increased-scale view of the cross section of another embodiment of the glass pane, taken in the break-out zone before lamination, and
- Fig. 5: shows an increased-scale view of the cross section of another embodiment of the glass pane, take in the break-out zone after lamination.

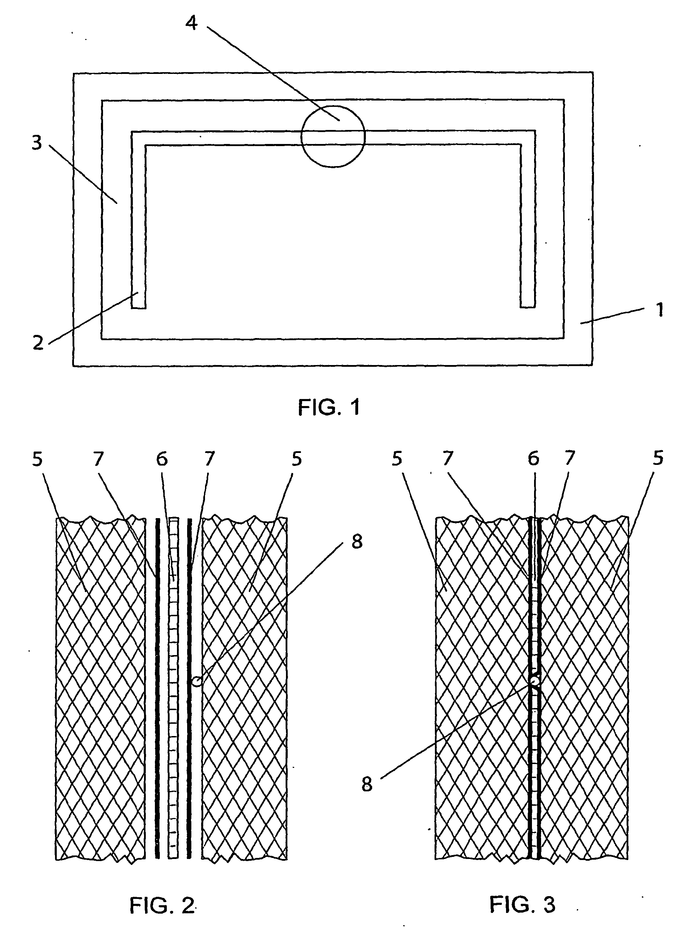

Fig. 1 shows the schematic view of the inventive escape window. The frame 1 of the emergency escape window is mounted on the vehicle (not shown in the figure) in a manner known in the art. A laminated glass pane 3 is secured in the frame 1, also in a manner known in the art. The laminated glass pane 3 has a U-shaped break-out zone 2, of which a schematic non-proportional view is shown in Fig. 1. An impact point 4 is marked in a conventional way, for instance by screen printing, on the laminated glass pane 3.

The configuration of the laminated glass pane 3 is shown in Figs. 2 and 3. Fig. 2 shows the glass pane before lamination, while Fig. 3 shows the glass pane after lamination. The laminated glass pane 3 is assembled from two glass plates 5 and an adhesive interlayer 6 inserted between them. The glass plate 5 is made of single-layer safety glass and the adhesive interlayer 6 is PVB foil in the break-out zone 2 an anti-adhesive foil 7 is disposed between the glass plates 5 and the adhesive interlayer 6. The anti-adhesive foil 7 is 20-mm wide aluminium foil. A cutting element 8, according to a preferred embodiment a copper wire, is disposed between the glass plate 5 and the anti-adhesive foil 7. The diameter of the copper wire is the same as the thickness of the PVB foil. Before lamination there is a gap equalling in width the diameter of the copper wire between the glass plate 5 and the aluminium foil. As it can be seen in Fig. 3, the glass plates 5, the adhesive interlayer 6, and the anti-adhesive folls are bonded together, with the cutting element 8 having been pressed into the adhesive interlayer 6 completely cutting through it.

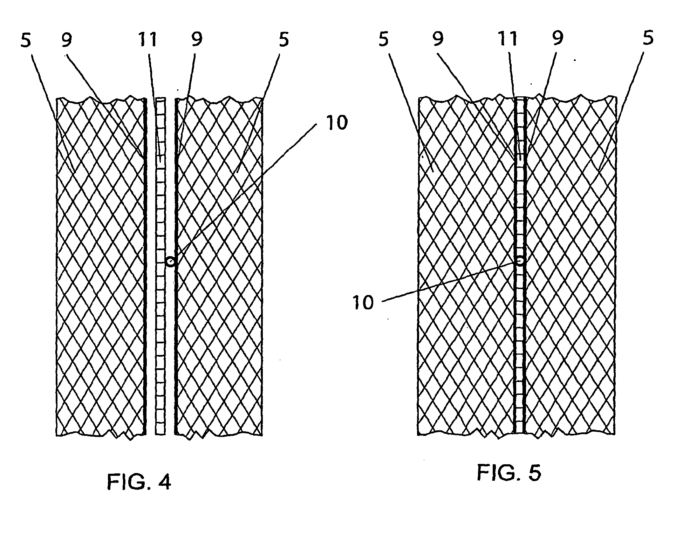

Fig. 4 and 5, respectively, show another implementation of the break-out zone 2 of the laminated glass pane 3 before and after lamination. In this embodiment paraffin is applied in the break-out zone 2 as an anti-adhesive layer 9 to the glass plates 5 and cutting element 10 placed on one of the glass plates 5. In this case the material of the adhesive interlayer 11 was EVA.

One of the principal advantages of the inventive emergency escape window and the method for producing thereof is that it is not necessary to split (cut through) the adhesive interlayer prior to lamination and thus it is unnecessary to exactly fit the glass, plates to the adhesive interlayer. The escape-window tolerates temperature change to a high extent, with no size change or displacement occurring even at direct, intensive sunlight.

### List of reference numerals

- 1: frame
- 2: break-out zone
- 3: laminated glass pane
- 4: impact point
- 5: glass plate
- 6: adhesive interlayer
- 7: anti-adhesive foil
- 8: cutting element
- 9: anti-adhesive layer
- 10: cutting element
- 11: adhesive interlayer

## Claims

1. Emergency escape window, with break-out zone and a predetermined impact point for vehicles, primarily railroad vehicles, comprising a laminated glass pane embedded in a frame, where the laminated glass pane consists of at least two toughened glass plates and an interlayer or interlayers located between the glass plates, and where the glass plates are not bonded together in the break-out zone, **characterised by** that
anti-adhesive foil (7) or an anti-adhesive layer (9) and at least one cutting element (8) adapted for splitting the adhesive interlayer (6) after lamination are disposed in the break-out zone (2) between the glass plates (5) and the adhesive interlayer (6), the anti-adhesive foil (7) or the anti-adhesive layer (9) has a width of 20 mm, and the cutting element (8, 10) is implemented as a wire having a diameter that substantially equals the thickness of the adhesive interlayer (6).

2. The emergency escape window according to Claim 1, **characterised by** that the anti-adhesive foil (7) is aluminium foil.

3. The emergency escape window according to Claim 1, **characterised by** that the material of the anti-adhesive layer (9) is an industrial mould release agent.

4. The emergency escape window according to Claim 1, **characterised by** that the wire is made of copper.

5. The emergency escape window according to Claim 1, **characterised by** that the wire is made of plastic.

6. The emergency escape window according to Claim 1, **characterised by** that the break-out zone (2) is located near the two sides and the upper edge of the safety window.

7. The emergency escape window according to Claim 1, **characterised by** that the break-out zone (2) is made up from portions located near all four sides of the safety window.

8. The emergency escape window according to Claim 1, **characterised by** that the material of the adhesive interlayer (6) is polyvinyl-butyral (PVB).

9. The emergency escape window according to Claim 1, **characterised by** that the material of the adhesive interlayer (6) is ethylene-vinyl-acetate (EVA).

10. Method for producing the emergency escape window according to Claim 1, comprising the steps of inserting an adhesive interlayer between the toughened glass plates, placing in the break-out zone an anti-adhesive foil on the toughened glans plates or on the adhesive interlayer and at least one cutting element between at teat one of the toughened glass plates and the anti-adhesive foil, and subsequently laminating the glass pane in a manner known per se, during which operation the cutting element completely cuts through the molten adhesive interlayer.

11. Method for producing the emergency escape window according to Claim 1, comprising the steps of inserting an adhesive interlayer between the toughened glass plates, applying in the break-out zone an anti-adhesive layer on the toughened glass plates or on the adhesive interlayer and placing at least one cutting element coated with anti-adhesive material between at least one of the toughened glass plates and the anti-adhesive layer, and subsequently laminating the glass pane in a manner known per se, during which operation the cutting element completely cuts through the molten adhesive interlayer.

## Patentansprüche

1. Notfluchtfenster mit Ausbrechzone und einer vorbestimmten Aufprallstelle für Fahrzeuge, insbesondere Schienenfahrzeuge, mit einer laminierten Glasscheibe, die in einen Rahmen eingebettet ist, wobei die laminierte Glasscheibe aus wenigstens zwei vorgespannten bzw. gehärteten Glasplatten und einer Zwischenschicht oder Zwischenschichten besteht, die zwischen den Glasplatten angeordnet ist/sind, und wobei die Glasplatten in der Ausbrechzone nicht miteinander verbunden sind,
**dadurch gekennzeichnet, dass**
eine antiadhäsive bzw. Antiklebefolie (7) oder eine antiadhäsive Antiklebe-Schicht (9) und wenigstens ein Schneidelement (8), angepasst zum Zersplittern der Klebe-Zwischenschicht (6) nach der Laminierung, in der Ausbrechzone (2) zwischen den Glasplatten (5) und der Klebe-Zwischenschicht (6) angeordnet ist, wobei die antiadhäsive Folie (7) oder die antiadhäsive Schicht (9) eine Breite von 20 mm hat, und wobei das Schneidelement (8, 10) als ein Draht mit einem Durchmesser implementiert ist, der im wesentlichen gleich der Dicke der Klebe-Zwischenschicht (6) ist.

2. Notfluchtfenster nach Anspruch 1, **dadurch gekennzeichnet, dass** die antiadhäsive Folie (7) eine Aluminiumfolie ist.

3. Notfluchtfenster nach Anspruch 1, **dadurch gekennzeichnet, dass** das Material der antiadhäsiven Schicht (9) ein industrielles Formtrennmittel ist.

4. Notfluchtfenster nach Anspruch 1, **dadurch gekennzeichnet, dass** der Draht aus Kupfer hergestellt ist.

5. Notfluchtfenster nach Anspruch 1, **dadurch gekennzeichnet, dass** der Draht aus Plastik bzw. Kunststoff hergestellt ist.

6. Notfluchtfenster nach Anspruch 1, **dadurch gekennzeichnet, dass** die Ausbrechzone (2) in der Nähe der beiden Seiten und des oberen Randes des Sicherheitsfensters angeordnet ist.

7. Notfluchtfenster nach Anspruch 1, **dadurch gekennzeichnet, dass** die Ausbrechzone (2) aus Bereichen aufgebaut ist, die sich in der Nähe aller vier Seiten des Sicherheitsfensters befinden.

8. Notfluchtfenster nach Anspruch 1, **dadurch gekennzeichnet, dass** das Material der Klebe-Zwischenschicht (6) Polyvinyl Butyral (PVB) ist.

9. Notfluchtfenster nach Anspruch 1, **dadurch gekennzeichnet, dass** das Material der Klebe-Zwischenschicht (6) Ethylen-Vinyl-Acetat (EVA) ist.

10. Verfahren zur Herstellung des Notfluchtfensters nach Anspruch 1 mit den Schritten
Einfügen einer Klebe-Zwischenschicht zwischen die gehärteten bzw. vorgespannten Glasplatten;
Anordnung einer antiadhäsiven bzw. Antiklebe-Folie auf den gehärteten bzw. vorgespannten Glasplatten oder auf der Klebe-Zwischenschicht und wenigstens eines Schneidelementes zwischen wenigstens einer der gehärteten bzw. vorgespannten Glasplatten und der antiadhäsiven Folie in der Ausbrechzone, und
anschließendes Laminieren der Glasscheibe in an sich bekannter Weise, wobei während dieses Vorgangs das Schneidelement vollständig durch die geschmolzene Klebe-Zwischenschicht schneidet.

11. Verfahren zur Herstellung des Notfluchtfensters nach Anspruch 1 mit den Schritten:
Einfügen einer Klebe-Zwischenschicht zwischen die gehärteten bzw. vorgespannten Glasplatten;
Aufbringen einer antiadhäsiven bzw. Antiklebe-Schicht auf die gehärteten bzw. vorgespannten Glasplatten oder auf die Klebe-Zwischenschicht in der Ausbrechzone und Anordnung wenigstens eines Schneidelementes, das mit einem antiadhäsiven bzw. Antiklebe-Material beschichtet ist, zwischen wenigstens einer der verstärkten oder vorgespannten Glasplatten und der antiadhäsiven Schicht; und
anschließendes Laminieren der Glasscheibe in an sich bekannter Weise,
wobei während dieses Vorgangs das Schneidelement vollständig durch die geschmolzene Klebe-Zwischenschicht schneidet.

## Revendications

1. Vitre d'évacuation en cas d'urgence avec zone de rupture et un point d'impact prédéfini pour véhicules, essentiellement des véhicules ferroviaires, comprenant un carreau de verre feuilleté implanté dans un cadre, le carreau de verre feuilleté consistant en au moins deux plaques de verre trempé et une couche intermédiaire située ou des couches intermédiaires situées entre les plaques de verre, et les plaques de verre n'étant pas liées ensemble dans la zone de rupture, **caractérisée en ce que**
de la feuille anti-adhésive (7) ou une couche anti-adhésive (9) et au moins un élément coupant (8) adapté à fendre la couche intermédiaire adhésive (6) après feuilletage sont disposés dans la zone de rupture (2) entre les plaques de verre (5) et la couche intermédiaire adhésive (6), la feuille anti-adhésive (7) ou la couche anti-adhésive (9) a une largeur de 20 mm, et l'élément coupant (8, 10) est mis en oeuvre comme un fil ayant un diamètre qui est sensiblement égal à l'épaisseur de la couche intermédiaire adhésive (6).

2. Vitre d'évacuation en cas d'urgence selon la revendication 1, **caractérisée en ce que** la feuille anti-adhésive (7) est de la feuille d'aluminium.

3. Vitre d'évacuation en cas d'urgence selon la revendication 1, **caractérisée en ce que** le matériau de la couche anti-adhésive (9) est un agent de démoulage industriel.

4. Vitre d'évacuation en cas d'urgence selon la revendication 1, **caractérisée en ce que** le fil est fait de cuivre.

5. Vitre d'évacuation en cas d'urgence selon la revendication 1, **caractérisée en ce que** le fil est fait de plastique.

6. Vitre d'évacuation en cas d'urgence selon la revendication 1, **caractérisée en ce que** la zone de rupture (2) est située près des deux côtés et du bord supérieur de la vitre de sécurité.

7. Vitre d'évacuation en cas d'urgence selon la revendication 1, **caractérisée en ce que** la zone de rupture (2) est composée de portions situées près des quatre côtés de la vitre de sécurité.

8. Vitre d'évacuation en cas d'urgence selon la revendication 1, **caractérisée en ce que** le matériau de la couche intermédiaire adhésive (6) est du polybutyral de vinyle (PVB).

9. Vitre d'évacuation en cas d'urgence selon la revendication 1, **caractérisée en ce que** le matériau de la couche intermédiaire adhésive (6) est de l'éthylène-acétate de vinyle (EVA).

10. Procédé de production de la vitre d'évacuation en cas d'urgence selon la revendication 1, comprenant les étapes d'insertion d'une couche intermédiaire adhésive entre les plaques de verre trempé, de positionnement dans la zone de rupture d'une feuille anti-adhésive sur les plaques de verre trempé ou sur la couche intermédiaire adhésive et d'au moins un élément coupant entre au moins l'une des plaques de verre trempé et la feuille anti-adhésive, et subséquemment de feuilletage du carreau de verre d'une manière connue en soi, opération pendant laquelle l'élément coupant coupe complètement à travers la couche intermédiaire adhésive fondue.

11. Procédé de production de la vitre d'évacuation en cas d'urgence selon la revendication 1, comprenant les étapes d'insertion d'une couche intermédiaire adhésive entre les plaques de verre trempé, d'application dans la zone de rupture d'une couche anti-adhésive sur les plaques de verre trempé ou sur la couche intermédiaire adhésive et de positionnement d'au moins un élément coupant revêtu de matériau anti-adhésif entre au moins l'une des plaques de verre trempé et la couche anti-adhésive, et subséquemment de feuilletage du carreau de verre d'une manière connue en soi, opération pendant laquelle l'élément coupant coupe complètement à travers la couche intermédiaire adhésive fondue.
